# EUROPÄISCHE PATENTSCHRIFT

(11) **EP 3 441 610 B1**
(45) Veröffentlichungstag und Bekanntmachung des Hinweises auf die Patenterteilung: **28.10.2020**
(21) Anmeldenummer: 17185282.5
(22) Anmeldetag: 08.08.2017
(51) Int. Cl.: F03D 80/00

(54) **VORRICHTUNG FÜR EINE VERBINDUNG ZWISCHEN EINEM MASCHINENHAUS UND EINER ROTORNABE EINER WINDENERGIEANLAGE UND WINDENERGIEANLAGE**
DEVICE FOR A CONNECTION BETWEEN AN ENGINE HOUSE AND A ROTOR HUB OF A WIND ENERGY SYSTEM AND WIND ENERGY SYSTEM
DISPOSITIF DE CONNEXION ENTRE UNE NACELLE ET UN MOYEU DU ROTOR D'UNE ÉOLIENNE ET ÉOLIENNE

(43) Veröffentlichungstag der Anmeldung: 13.02.2019
(73) Patentinhaber: Nordex Energy GmbH, 22419 Hamburg (DE)
(72) Erfinder: Schaale, Thomas, 18055 Rostock (DE)
(74) Vertreter: Garrels, Sabine

(56) Entgegenhaltungen:
- EP-A1- 2 410 636
- CN-U- 201 723 384
- US-A1- 2008 012 346
- US-A1- 2017 030 328

## Beschreibung

Die Erfindung betrifft eine Vorrichtung für eine variable Schnittstelle im Bereich Verkleidung zwischen einem Maschinenhaus und einer Rotornabe einer Windenergieanlage.

Eine Windenergieanlage besteht üblicherweise aus einem Turm und einem um die Längsachse des Turms drehbar auf dem Turmkopf gelagerten Maschinenhaus. Das Maschinenhaus, in welchem gemeinsam mit anderen Anlagenkomponenten eine Tragstruktur, ein Triebstrang und ein Generator angeordnet sind, weist eine Maschinenhausverkleidung auf. Eine Rotornabe, die mit mindestens einem Rotorblatt verbunden ist, wird durch eine Rotornabenverkleidung (Spinner) vor Umwelteinflüssen geschützt.

Die Schnittstelle zwischen der Maschinenhausverkleidung und der sich zusammen mit der Rotornabe drehenden Rotornabenverkleidung wird meist mit Hilfe eines integrierten Kragens(Integralbauweise) der Maschinenhausverkleidung hergestellt, um das Eindringen von Fluiden und Feststoffen zu verhindern. Diese Schnittstelle wird maßgebend von der Triebstrangachse bestimmt, da diese gleichermaßen die Rotationsachse der Rotornabe und der Rotornabenverkleidung darstellt. Bei größeren Rotornaben ändern sich die Höhe der Triebstrangachse in Bezug auf die Tragstruktur (Verbund aus Maschinenträger und Generatorträger) und die Abmessungen der Maschinenhausverkleidung. Somit ist es notwendig, für jede Rotorgröße eine entsprechende Maschinenhausverkleidung vorzuhalten, insbesondere muss der Durchmesser des Kragens angepasst werden.

In EP 2314865 B1 wird ein Windgenerator mit einer verbesserten Maschinenhausverkleidung offenbart, bei welcher die Verbindung zwischen einzelnen Teilen der Maschinenhausverkleidung über Ringe mit Hilfe von Trägern erfolgt.

CN 201723384 U befasst sich mit einer Dichtungsvorrichtung zwischen einem Maschinenhaus und einer Rotornabe einer Windenergieanlage. Die Dichtungsvorrichtung umfasst einen an der Rotornabe befestigten ersten Dichtungsring und einen an dem Maschinenhaus angeschlossenen zweiten Dichtungsring. Der untere Teil des ersten Dichtungsringes und der obere Teil des zweiten Dichtungsringes sind derart zueinander gebogen, dass der erste Dichtungsring in den zweiten Dichtungsring eingreift. Die gegensinnig eingebogenen Dichtringe sind jeweils fest an dem Maschinenhaus und der Rotornabe der Windenergieanlage angeordnet.

### Darstellung der Erfindung

Aufgabe der Erfindung ist es, die Schnittstelle zwischen einem Maschinenhaus und einer Rotornabe einer Windenergieanlage im Bereich der Verkleidung variabel zu gestalten.

Die Aufgabe wird durch die in den Ansprüchen offenbarten Merkmale gelöst. Das Wesen der Erfindung besteht darin, dass ein umlaufender Kragen nicht mehr in die Maschinenhausverkleidung integriert (Integralbauweise) sondern als separates Bauteil (Differentialbausweise) ausgeführt ist.

Die erfindungsgemäße Vorrichtung zur Anpassung an Form und Durchmesser für eine variable Schnittstelle zwischen einem Maschinenhaus und einer Rotornabe einer Windenergieanlage im Bereich Verkleidung umfasst Teile einer Maschinenhausverkleidung und einer Rotornabenverkleidung wobei ein Bauteil zwischen der Maschinenhausverkleidung und der Rotornabenverkleidung angeordnet ist und eine Verbindung zwischen beiden hergestellt wird, und ist dadurch gekennzeichnet, dass das separate, umlaufende Bauteil aus einem, in Form und Durchmesser an eine Montageöffnung der Rotornabenverkleidung und an eine Montageöffnung der Maschinenhausverkleidung angepassten Formteil besteht, welches aus zwei umlaufenden, zueinander winkelig angeordneten und fest miteinander verbundenen Flanschen besteht. Das umlaufende Bauteil übernimmt die Aufgabe des angeformten Kragens aus dem Stand der Technik. Bei veränderter Höhe einer Triebstrangachse des Triebstrangs in Bezug auf die Tragstruktur, jedoch bei gleicher Position eines Turmkopfflansches des Turmkopfes, werden durch die Vorrichtung alle angrenzenden Bauteile der Maschinenhausverkleidung (1) in ihrer Form beibehalten.

Das Bauteil kann mit der Rotornabenverkleidung oder mit der Maschinenhausverkleidung verbunden sein, wobei das jeweils andere angrenzende Teil der Verkleidung das Bauteil überlappt. Hierzu werden bekannte Verbindungstechnologien, wie Schrauben, Nieten, Kleben etc. angewendet.

Weiterhin wird eine Windenergieanlage unter Schutz gestellt, welche bestehend aus einem Turm und einem um die Längsachse des Turms drehbar auf dem Turmkopf gelagerten Maschinenhaus besteht, wobei eine Vorrichtung zur Anpassung an Form und Durchmesser für eine variable Schnittstelle zwischen einem Maschinenhaus und einer Rotornabe als ein separates, umlaufendes Bauteil zwischen der Maschinenhausverkleidung und der Rotornabenverkleidung angeordnet ist, wobei das Bauteil aus einem, in Form und Durchmesser an eine Montageöffnung der Rotornabenverkleidung und an eine Montageöffnung der Maschinenhausverkleidung angepassten Formteil besteht, welches aus zwei umlaufenden, zueinander winkelig angeordneten und fest miteinander verbundenen Flanschen besteht.

Vorteil dieser Lösung ist es, dass bei veränderter Höhe der Triebstrangachse in Bezug auf die Tragstruktur, jedoch gleicher Position des Turmkopfflansches, die Teile der Maschinenhausverkleidung unverändert bleiben können. Alle angrenzenden Bauteile der Maschinenhausverkleidung können in ihrer Form beibehalten werden, z.B. das Tragwerk der Maschinenhausverkleidung und Anbauteile.

Da die Kontur der Maschinenhausverkleidung nicht beeinflusst wird, müssen keine neuen Werkzeugformen und Modelle erstellt werden. Darüber hinaus können verschieden Turbinen-Plattformen das gleiche Aussehen erhalten.

### Ausführung der Erfindung

Die Erfindung wird anhand eines Ausführungsbeispiels näher erläutert. Hierzu zeigen
- Figur 1: den Stand der Technik mit einem umlaufenden, an der Maschinenhausverkleidung angeformten Kragen (Integralbauweise) und
- Figur 2: die erfindungsgemäße Lösung mit einem separaten Bauteil als Kragen zwischen Maschinenhausverkleidung und Rotornabenverkleidung (Differentialbauweise).

Für die Beschreibung werden gleiche Teile mit dem gleichen Bezugszeichen versehen.

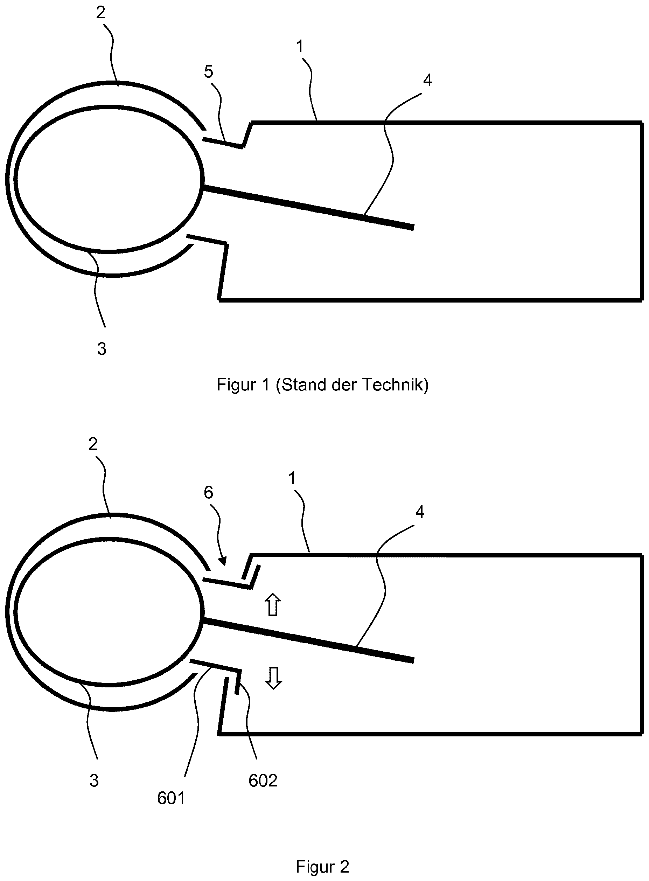

Der Stand der Technik wird in Figur 1 gezeigt. Es ist skizzenhaft eine Maschinenhausverkleidung 1, eine Rotornabenverkleidung 2 und eine Rotornabe 3 mit einer Triebstrangachse 4 dargestellt. An die Maschinenhausverkleidung 1 ist umlaufend im Bereich der Schnittstelle zwischen Maschinenhausverkleidung 1 und Rotornabe 3 ein Kragen 5 angeformt. Der Kragen 5 wird von der Rotornabenverkleidung 2 überlappt, so dass keine Fluide oder Feststoffe eindringen können.

Da die Tendenz zu immer größeren Windenergieanlagen und damit zu größeren Durchmessern der Rotornaben 3 geht, ändert sich die Höhe der Triebstrangachse 4 und somit der Rotornabe 3 in Bezug zur Tragstruktur. Somit muss die Maschinenhausverkleidung 1 mit dem integrierten Kragen 5 für jede Größe der Rotornabe 3 jeweils angepasst werden.

Figur 2 zeigt skizzenhaft die erfindungsgemäße Lösung mit einem separaten, umlaufenden Bauteil 6 als Verbindung zwischen Maschinenhaus und Rotornabe 3. Auch hier sind eine Maschinenhausverkleidung 1, eine Rotornabenverkleidung 2 und eine Rotornabe 3 mit einer Triebstrangachse 4 dargestellt. Die Lösung besteht in einem separaten Bauteil 6, welches die Aufgabe des Kragens 5 übernimmt. Das Bauteil 6 besteht aus einem, in der Form und dem Durchmesser an eine Montageöffnung 201 der Rotornabenverkleidung 2 und eine Montageöffnung 101 der Maschinenhausverkleidung 1 angepassten, ringförmigen Formteil, welches beispielsweise aus faserverstärktem Kunststoff hergestellt ist. Zwei zueinander winkelig angeordnete, umlaufende Flansche 601, 602 sind fest miteinander verbunden und bilden das separate Bauteil 6. Der Flansch 601 dient der Verbindung mit der Rotornabenverkleidung 2 und der Flansch 602 der Verbindung mit der Maschinenhausverkleidung 1. Durch diese Konstruktion eines separaten Bauteils 6 ist es möglich, dieses entweder direkt mit der Rotornabenverkleidung 2 oder mit der Maschinenhausverkleidung 1 mit Hilfe bekannter Verbindungstechnologien, bevorzugt mittels Schrauben, Kleben oder Nieten zu verbinden. Das jeweils andere angrenzende Teil der Verkleidung überlappt das Bauteil 6.

Da es sich bei der vorhergehenden, detailliert beschriebenen Vorrichtung für eine variable Schnittstelle zwischen einem Maschinenhaus und einer Rotornabe einer Windenergieanlage im Bereich Verkleidung um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen des Bauteils 6 sowie dessen Flansche 601, 602 in anderer Form als in der hier beschriebenen folgen. Das Bauteil 6 kann beispielsweise sowohl einen runden Durchmesser haben als auch ellipsenförmig sein. Weiter schließt die Verwendung der unbestimmten Artikel "ein" bzw. "eine" nicht aus, dass die betreffenden Merkmale auch mehrfach vorhanden sein können.

## Patentansprüche

1. Vorrichtung für eine variable Schnittstelle im Bereich Verkleidung zur Anpassung an Form und Durchmesser zwischen einem Maschinenhaus, umfassend eine Tragstruktur und einen Triebstrang, und einer Rotornabe einer Windenergieanlage, welche einen Turm mit einem Turmkopf umfasst, wobei die Verkleidung Teile einer Maschinenhausverkleidung (1) und einer Rotornabenverkleidung (2) umfasst, wobei ein Bauteil (6) zwischen der Maschinenhausverkleidung (1) und der Rotornabenverkleidung (2) angeordnet ist und eine Verbindung zwischen beiden hergestellt wird,
**dadurch gekennzeichnet, dass**
das Bauteil (6) ein separates, umlaufendes Bauteil (6) ist und aus einem, in Form und Durchmesser an eine Montageöffnung (201) der Rotornabenverkleidung (2) und an eine Montageöffnung (101) der Maschinenhausverkleidung (1) angepassten Formteil besteht, welches aus zwei umlaufenden, zueinander winkelig angeordneten und fest miteinander verbundenen Flanschen (601, 602) besteht, wodurch bei veränderter Höhe einer Triebstrangachse (4) des Triebstrangs in Bezug auf die Tragstruktur, jedoch bei gleicher Position eines Turmkopfflansches des Turmkopfes, alle angrenzenden Bauteile der Maschinenhausverkleidung (1) in ihrer Form beibehalten werden.

2. Vorrichtung nach Anspruch 1 **dadurch gekennzeichnet, dass**
das Bauteil (6) mit der Rotornabenverkleidung (2) oder der Maschinenhausverkleidung (1) verbunden ist, wobei das jeweils andere angrenzende Teil der Verkleidung das Bauteil (6) überlappt.

3. Vorrichtung nach Anspruch 2 **dadurch gekennzeichnet, dass**
das Bauteil (6) mit der Rotornabenverkleidung (2) oder der Maschinenhausverkleidung (1) mittels bekannter Verbindungstechnologien verbunden ist.

4. Windenergieanlage, bestehend aus einem Turm und einem um die Längsachse des Turms drehbar auf dem Turmkopf gelagerten Maschinenhaus, umfassend Teile einer Maschinenhausverkleidung (1) und einer Rotornabenverkleidung (2), mit einer Vorrichtung für eine variable Schnittstelle nach Anspruch 1, **dadurch gekennzeichnet, dass** die Vorrichtung als ein separates, umlaufendes Bauteil (6) zwischen der Maschinenhausverkleidung (1) und der Rotornabenverkleidung (2) angeordnet ist, wobei das Bauteil (6) aus einem, in Form und Durchmesser an eine Montageöffnung (201) der Rotornabenverkleidung (2) und an eine Montageöffnung (101) der Maschinenhausverkleidung (1) angepassten Formteil besteht, welches aus zwei umlaufenden, zueinander winkelig angeordneten und fest miteinander verbundenen Flanschen (601, 602) besteht, wodurch bei veränderter Höhe einer Triebstrangachse (4) des Triebstrangs in Bezug auf die Tragstruktur, jedoch bei gleicher Position eines Turmkopfflansches des Turmkopfes, alle angrenzenden Bauteile der Maschinenhausverkleidung (1) in ihrer Form beibehalten werden..

## Claims

1. Device for a variable interface in the region of cover for adaptation to form and diameter between a nacelle, comprising a support structure and a drive train, and a rotor hub of a wind turbine, the wind turbine comprises a tower with a tower head, wherein the cover comprises parts of a nacelle cover (1) and of a rotor hub cover (2), wherein a component (6) is arranged between the nacelle cover (1) and the rotor hub cover (2), and a connection is established between the two,
**characterized in that**
the component (6) is a separate peripheral component (6) and consists of a shaped part which is adapted in terms of form and diameter to an installation opening (201) of the rotor hub cover (2) and to an installation opening (101) of the nacelle cover (1) and which consists of two peripheral flanges (601, 602) arranged at an angle to one another and connected fixedly to one another, whereby, with a changed height of a drive train axis (4) of the drive train in relation to the support structure, but with the same position of a tower head flange of the tower head, all the adjacent components of the nacelle cover (1) are maintained in terms of their form.

2. Device according to Claim 1, **characterized in that** the component (6) is connected to the rotor hub cover (2) or to the nacelle cover (1), wherein the in each case other adjacent part of the cover overlaps the component (6).

3. Device according to Claim 2, **characterized in that** the component (6) is connected to the rotor hub cover (2) or to the nacelle cover (1) by means of known connection techniques.

4. Wind turbine consisting of a tower and of a nacelle which is mounted on the tower head so as to be rotatable about the longitudinal axis of the tower, comprising parts of a nacelle cover (1) and of a rotor hub cover (2) and having a device for a variable interface according to Claim 1, **characterized in that** the device is arranged as a separate peripheral component (6) between the nacelle cover (1) and the rotor hub cover (2), wherein the component (6) consists of a shaped part which is adapted in terms of form and diameter to an installation opening (201) of the rotor hub cover (2) and to an installation opening (101) of the nacelle cover (1) and which consists of two peripheral flanges (601, 602) arranged at an angle to one another and connected fixedly to one another, whereby, with a changed height of a drive train axis (4) of the drive train in relation to the support structure, but with the same position of a tower head flange of the tower head, all the adjacent components of the nacelle cover (1) are maintained in terms of their form.

## Revendications

1. Dispositif d'interface variable au niveau d'un carénage destiné à l'adaptation à la forme et au diamètre entre une nacelle, comprenant une structure porteuse et une chaîne cinématique, et un moyeu de rotor d'une éolienne, qui comprend une tour pourvue d'une tête de tour, le carénage comprenant des parties d'un carénage de nacelle (1) et d'un carénage de moyeu de rotor (2), un composant (6) étant disposé entre le carénage de nacelle (1) et le carénage de moyeu de rotor (2) et une connexion étant établie entre les deux,
**caractérisé en ce que**
le composant (6) est un composant circonférentiel séparé (6) et comprend une pièce moulée dont la forme et le diamètre sont adaptés à une ouverture de montage (201) du carénage de moyeu de rotor (2) et à une ouverture de montage (101) du carénage de nacelle (1) et comprend deux brides circonférentielles (601, 602) qui sont disposées angulairement l'une par rapport à l'autre et qui sont reliées de manière fixe l'une à l'autre de sorte que, si la hauteur d'un axe de transmission (4) de la chaîne cinématique varie par rapport à la structure porteuse, mais avec une même position d'une bride de la tête de tour, tous les composants adjacents du carénage de nacelle (1) conservent leur forme.

2. Dispositif selon la revendication 1, **caractérisé en ce que** le composant (6) est relié au carénage de moyeu de rotor (2) ou au carénage de nacelle (1), l'autre partie adjacente du carénage chevauchant le composant (6).

3. Dispositif selon la revendication 2, **caractérisé en ce que** le composant (6) est relié au carénage de moyeu de rotor (2) ou au carénage de nacelle (1) à l'aide de technologies de liaison connues.

4. Éolienne comprenant une tour et une nacelle qui est montée sur la tête de tour de manière rotative sur l'axe longitudinal de la tour, ladite éolienne comprenant des parties d'un carénage de nacelle (1) et d'un carénage de moyeu de rotor (2) et un dispositif à interface variable selon la revendication 1, **caractérisée en ce que** le dispositif est disposé en tant que composant circonférentiel séparé (6) entre le carénage de nacelle (1) et le carénage de moyeu de rotor (2), le composant (6) comprenant une pièce moulée dont la forme et le diamètre sont adaptés à une ouverture de montage (201) du carénage de moyeu de rotor (2) et à une ouverture de montage (101) du carénage de nacelle (1) et qui comprend deux brides circonférentielles (601, 602) disposées angulairement l'une par rapport à l'autre et reliées de manière fixe l'une à l'autre de sorte que, si la hauteur d'un axe de transmission (4) de la chaîne cinématique varie par rapport à la structure porteuse, mais avec une même position d'une bride de la tête de tour, tous les composants adjacents du carénage de nacelle (1) conservent leur forme.
